# FASCICULE DE BREVET EUROPEEN

(11) **EP 0 633 058 B1**
(45) Date de publication et mention de la délivrance du brevet: **17.09.1997**
(21) Numéro de dépôt: 94401552.8
(22) Date de dépôt: 06.07.1994
(51) Int. Cl.: B01J 13/04

(54) **Procédé de préparation de sphérules**
Verfahren zur Herstellung von Kügelchen
Process for preparing spherules

(30) Priorité: 08.07.1993 FR 9308386
(43) Date de publication de la demande: 11.01.1995
(73) Titulaire: RHONE-POULENC NUTRITION ANIMALE, 92160 Antony (FR)
(72) Inventeur: Cervos, Eric, F-69410 Champagne au Mont d'Or (FR); Labourt-Ibarre, Pierre, F-69006 Lyon (FR); Le Thiesse, Jean-Claude, F-41200 Saint-Etienne (FR); Statiotis, Eraclis, F-38280 Villette d'Anthon (FR)
(74) Mandataire: Le Pennec, Magali

(56) Documents cités:
- EP-A- 0 097 907
- EP-A- 0 261 616
- EP-A- 0 515 997
- US-A- 4 670 247
- US-A- 4 921 705

## Description

La présente invention concerne un nouveau procédé de stabilisation de principes actifs alimentaires et/ou médicamenteux. Elle concerne aussi un procédé de préparation de sphérules de principes actifs et les sphérules obtenues.

Parmi les principes actifs alimentaires et/ou médicamenteux utilisables pour préparer les sphérules selon l'invention, on peut citer parmi les vitamines : la vitamine A, la vitamine E, la vitamine B₁₂, la vitamine H ou biotine, la vitamine D₃, la vitamine PP, le vitamine K₃ ou menadione, la vitamine B₁ ou thiamine, la vitamine B₂ ou riboflavine, la vitamine B₃ ou niacine, la vitamine B₅ ou acide panthoténique, la vitamine B₆ ou pyridoxine ; parmi les caroténoïdes : le β carotène, l'asthaxanthine, la canthaxanthine ; parmi les enzymes : la β glucanase, la xylanase.

On préfère, parmi ces vitamines stabiliser les vitamines A et E.

Les vitamines A et E sont largement utilisées en alimentation animale pour favoriser la croissance des animaux. Les aliments pour animaux étant souvent préparés par un procédé qui consiste à former des particules par l'action conjointe de la pression et de la chaleur, les principes actifs sensibles à la chaleur et à la pression ne peuvent subir cette procédure sans subir d'importantes dégradations.

Afin de préserver, par exemple la vitamine A, il est connu depuis longtemps, de la protéger en la mélangeant avec des protéines réticulées en présence d'un aldéhyde.

Divers procédés de réticulation des protéines en présence ou en l'absence de la vitamine A ont été décrits. La réticulation des protéines en présence de vitamine A ou E pose un problème supplémentaire par rapport à la réticulation en l'absence de vitamine A ou E. La vitamine A sous forme acétate ou la vitamine E sont des produits huileux qui ne se mélangent avec les protéines et leur agent de réticulation que sous la forme d'une émulsion huile dans eau qui n'est jamais facile à manipuler. La réticulation de la protéine exige en plus un chauffage pendant une période relativement longue, ce qui n'est pas favorable à la stabilité de ces vitamines.

Un premier procédé de réticulation de la gélatine en présence d'acétaldéhyde pour protéger la vitamine A est par exemple proposé dans le brevet EP 261 616. Dans ce brevet, on réalise un mélange "intime" contenant la protéine, un alcool miscible à l'eau, l'acétaldéhyde et environ 5% d'eau et la vitamine A, dans ce mélange, dit "intime", la vitamine A se présente sous forme de gouttes de moins de 10 microns. Ce mélange est lyophilisé de façon à obtenir des particules solides de diamètre compris entre 100 et 800 microns. Les particules solides sont ensuite soumises à des vapeurs d'acétaldéhyde pendant une période d'environ 3 heures à une température comprise entre 50 et 60°C.

Cette méthode de préparation ne peut être réalisée selon un procédé continu car elle est réalisée en deux étapes, chacune d'entre elles exigeant un type d'appareil différent, un lyophiliseur et un appareil de pulvérisation. La lyophilisation est parmi ces deux étapes, l'étape la plus couteuse car elle a toujours une productivité extrêmement limitée ce qui rend le produit obtenu très onéreux.

Un deuxième procédé de préparation de sphérules de vitamine A est décrit dans le brevet EP 285 682. Selon ce procédé on prépare une émulsion contenant la vitamine, de l'eau, de la gélatine et un sucre que l'on transforme en gouttes par pulvérisation, ces gouttes sont mises en contact individuellement avec une poudre de cellulose qui doit présenter des caractéristiques bien particulières, cette mise en contact de chacune des gouttes avec la poudre de cellulose est réalisée selon différentes techniques jusqu'à durcissement des gouttes. Ensuite les gouttes durcies sont séparées de la poudre de cellulose par tamisage, le tamis retenant les gouttes durcies et laissant passer la poudre ce qui entraine un choix stricte de la dimension granulométrique de la poudre de cellulose et surtout une difficulté sur sa nature à ne pas s'agglomérer durant la mise en oeuvre du procédé. Les gouttes durcies sont ensuite séchées puis soumises à une opération de chauffage afin d'assurer la réticulation de la gélatine par réaction des groupes aminés de la gélatine avec les fonctions carbonyle du sucre. Ce procédé est particulièrement difficile à mettre en oeuvre car il exige un choix strict des matières utilisées et une surveillance particulièrement étroites des conditions de mise en oeuvre du procédé.

La présente invention a permis de résoudre les problèmes laissés par l'ensemble de l'art antérieur et a surtout permis d'atteindre un procédé très facile à mettre en oeuvre.

Elle consiste à faire passer à travers une buse une émulsion huile dans eau à base d'une charge alimentaire et/ou médicamenteuse, d'une protéine et d'eau pour former des sphérules, à laisser tomber les sphérules formées dans une colonne à contrecourant avec de l'air froid puis à récupérer en bas de cette tour les sphérules formées dans une solution aqueuse contenant l'agent de réticulation de la protéine.

Les principes actifs alimentaires ou médicamenteux sont de préférence choisis parmi les vitamines sous forme huileuse choisies par exemple parmi la vitamine A ou la vitamine E ou parmi des principes actifs dissous ou dispersés dans une huile alimentaire. Les huiles alimentaires sont choisies par exemple parmi les huiles végétales ou animales telles que l'huile d'arachide, de tournesol, de colza, de foie de morue.

La solution huileuse peut éventuellement contenir un ou plusieurs agent antioxydant tel que l'ionol, le tertiobutyl-3 hydroxy-4 anisole (BHA), le ditertiobutyl-3,5,hydroxy-4 toluène (BHT), l'éthoxy-6 dihydroxy-1,2 triméthyl-2,2,4 quinoléine (éthoxyquine), le tertiobutyl-3 dihydroxy-4 anisole (vendu sous la marque EMBANOX), ainsi que la vitamine E. Cette solution peut aussi contenir un ou plusieurs agents tensioactifs choisis notamment parmi le thiodipropionate de dilauryle vendu sous la marque Irganox, un stéarate alcalin ou alcalinoterreux, le stearoyl-2 lactylate de sodium ou de calcium, la carboxyméthylcellulose.

Selon une meilleure manière de mettre en oeuvre l'invention pour la formation de sphérules de vitamine A, la solution huileuse de vitamine a la composition pondérale suivante :

| | |
|---|---|
| - acétate de vitamine A | 70 à 80 % |
| - agent antioxydant | 10 à 30 % |
| - tensioactif | 0 à 5 % |

La protéine est mise en solution dans l'eau à une température supérieure à la température de gélification. On préfère utiliser la gélatine. Cette solution peut aussi éventuellement contenir un agent tensioactif, choisi notamment parmi les tensioactifs précédemment cités.

La solution aqueuse de la protéine est de préférence une solution aqueuse contenant environ 10 à 60 % (de préférence 20 à 30 %) en poids de gélatine et contenant éventuellement environ 10 à 60 % (de préférence 10 - 20 %) en poids de sucre (glucose, lactose, fructose, saccharose, maltodextrine) ou de glycérol.

L'émulsion primaire est formée par dispersion de la solution huileuse contenant les principes actifs alimentaires et/ou médicamenteux dans la solution aqueuse contenant la protéine à une température supérieure au point de gélification de la solution.

L'émulsion primaire est de préférence réalisée par mélange d'environ 10 à 30 % en poids de solution huileuse et de 70 à 90 % en poids de solution aqueuse de la protéine. D'autres mélanges, contenant des quantités différentes de chacune des solutions, sont bien sûrs réalisables, ils ne sortent pas du cadre de l'invention, les quantités préconisées n'étant que préférentielles.

Après formation des sphérules, on peut utiliser un agent de réticulation de la protéine qui est choisi, par exemple, parmi l'acétaldéhyde, le glutaraldéhyde, le glyoxal. L'agent de réticulation éventuellement utilisé peut être mis en oeuvre à l'état pur ou en solution aqueuse selon une concentration comprise entre 5 et 20 %.

En ce qui concerne le matériel utilisé pour mettre en oeuvre l'invention, il est composé de deux ensembles, un premier ensemble de mise en forme des sphérules et un deuxième ensemble de récupération des sphérules formées. Le premier ensemble de mise en forme des sphérules est constitué d'une buse et d'une tour de refroidissement.

La buse utilisée est de préférence une buse soumise à un système de vibration électrique de haute fréquence (500 à 10 000 hertz). Cette buse peut présenter une ou plusieurs perforations dont le diamètre sera fonction de la dimension des sphérules désirées. Dans le cadre de la présente invention on préfère obtenir des sphérules présentant un diamètre moyen de 300 microns, on utilise ainsi de préférence une buse présentant des perforations ayant un diamètre d'environ 100 microns. Au niveau de la buse on introduit, pour obtenir une meilleure régularité de la dimension des sphérules et pour éviter une coalescence des gouttes, un courant d'air à co-courant avec le jet sortant de la buse. Ce courant d'air a de préférence une température comprise entre la température ambiante et 60°C.

Dans le bas de la tour est introduit un courant d'air froid pour assurer le "figeage" de la sphérule. Ce courant d'air a de préférence une température comprise entre -20°C et 20°C et de préférence compris entre -5°C et 5°C. L'air froid sort de préférence de la tour en dessous de la buse à une distance d'environ un dixième par rapport au sommet de la tour. Cette dernière présente notamment une hauteur comprise entre 4 et 8 mètres.

La solution huileuse de vitamine A est introduite dans un des récipients de réserve en haut de la tour. Elle est de préférence maintenue à une température comprise entre 50 et 70°C. La buse est maintenue à une température comprise entre 70 et 80°C.

Le système de récupération des sphérules en bas de la tour qui contient la solution aqueuse de l'agent de réticulation selon une meilleure manière de mettre en oeuvre l'invention présente une forme particulière, l'alimentation du système de récupération est de préférence tangentielle au système de séparation des sphérules. Le bac liquide de récupération a ainsi de préférence une forme relativement plate se terminant par un cône disposé tangentiellement au système de séparation des sphérules.

Le système de séparation des sphérules est de préférence constitué d'un tambour filtrant avec système raclant. Le système de raclage permet de collecter les sphérules réticulées tandis que la solution réticulante, constituant le filtrat, est recyclée dans le circuit fermé du système de récupération. Le débit de circulation étant assuré par une pompe volumétrique.

On peut ainsi réguler le débit de la solution de réticulation de façon à maintenir sa température dans une fourchette étroite comprise entre 5 et 20°C ce qui permet un meilleur contrôle de la cinétique de réticulation à l'intérieur du système de récupération liquide des sphérules.

L'ensemble du procédé permet une production continue de sphérules de principes actifs alimentaires et/ou médicamenteux dans un appareil simple et n'exige pas la présence de matière pulvérente différente de la composition recherchée et n'exige pas non plus d'étape de séchage avant de procéder à la réticulation. Il présente donc un énorme avantage par rapport à l'ensemble des procédés connus à ce jour.

La présente invention sera plus complètement décrite à l'aide des exemples suivants qui ne doivent pas être considérés comme limitatifs de l'invention.

### EXEMPLE

### SOLUTION AQUEUSE DE LA PROTEINE

Dans un réacteur de 50 litres agité avec une turbine disperseuse tournant à 450-500 tours/minute, on introduit :
- 2,10 litres d'eau
- 0,10 kg de glycérine

On chauffe à 60°C. Sous agitation, on ajoute :
- 0,37 kg de lactose
- 0,62 kg de gélatine

On continue à agiter pendant 35 minutes à 60°C.

### SOLUTION DE LA CHARGE ALIMENTAIRE

Dans un réacteur, on met la charge vitaminée constituée de :
- 0,30 kg de vitamine A sous forme acétate
- 0,08 kg d'ionol
- 0,02 kg d'agent antioxydant (BHT)
- 0,003 kg de tensioactif (Irganox®)

On chauffe l'ensemble à environ 60°C et on le verse dans le réacteur précédent dans lequel la turbine est portée à 3000 tours/minute. On continue à agiter pendant 20 minutes en maintenant à 60°C.

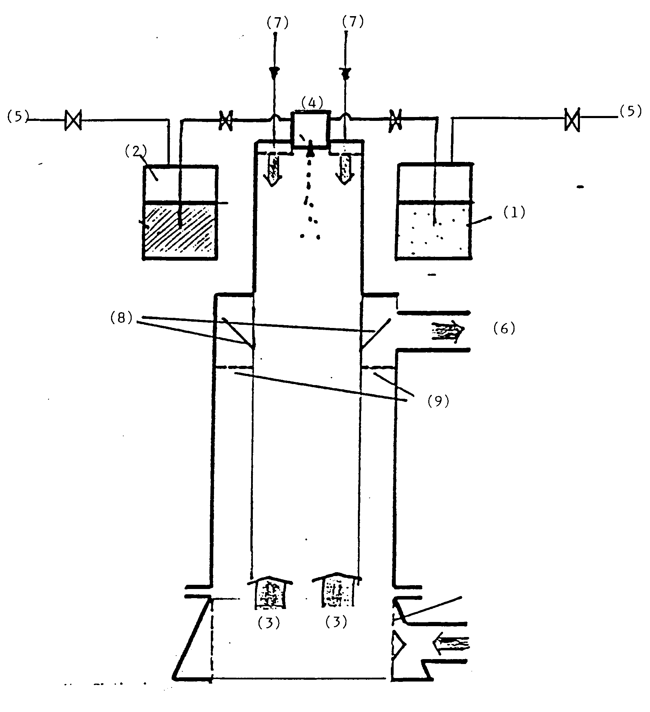

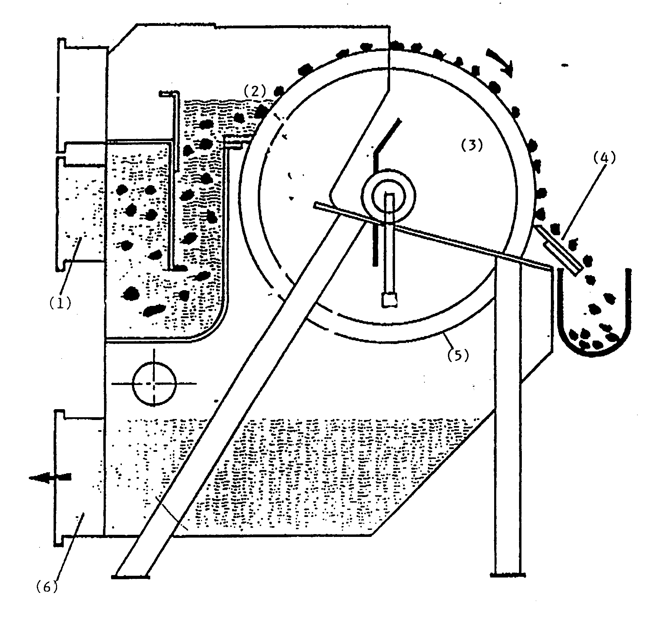

### TOUR DE PRILLING (Figure 1/2)

L'émulsion (3,6 kg) est introduite dans un des deux pots (1) ou (2) de la tour de prilling.

L'air de refroidissement est introduit dans le bas de la tour (3) à une température de -6°C et à un débit de 620 m³/h, il ressort au point (6) en-dessous de la sortie de la buse (4) à une température de 5°C.

L'azote (5) est admis en surpression dans les bacs de réserve à une pression d'environ 4 bars. L'air (7) à une température ambiante est aussi admis à cocourant à la sortie de la buse à une vitesse de 1 à 1,5 m/seconde. Le produit sort de la buse à une température de 77°C.

Dans la tour des chicanes sont introduites en (8) et une grille d'homogénéisation du flux d'air en (9).

On choisit une buse (4) à 7 trous chacun ayant un diamètre de 100 µm et subissant une vibration électrique de 4030 hertz.

### SYSTEME DE RECUPERATION DES SPHERULES (Figure 2/2)

Il est situé en bas de la tour et a la forme d'un bac dans lequel circule la solution aqueuse de glutaraldéhyde (1) à 5 % en poids. Les sphérules sont entrainées vers la sortie du bac de récupération qui est appliquée tangentiellement (2) à la surface d'un tambour filtrant (3). Ce tambour est composée d'un tamis filtrant (5) dont l'ouverture de mailles est de 250 µm. Le tambour a un mouvement rotatif d'environ 10 tours par minute. Un racleur en bronze (4) permet de collecter les sphérules réticulées, le filtrat (6) est renvoyé dans le bac vers le circuit de chauffage.

La teneur en vitamine A est en moyenne de 500.000 UI par gramme, l'extractible représente 50 UI/g et la granulométrie présente la répartition suivante :

| | | % en poids |
|---|---|---|
| Refus | 500 10⁻⁶m | 0,4 |
| | 400 10⁻⁶m | 21,5 |
| | 315 10⁻⁶m | 53,3 |
| | 250 10⁻⁶m | 24,6 |
| | 200 10⁻⁶m | 0,1 |

### EXEMPLE 2

On reproduit l'exemple 1 en utilisant une charge vitaminée ne contenant pas d'agent tensioactif, ne contenant pas d'agent antioxydant et ne contenant ni tensioactif ni agent antioxydant.

On mesure la granulométrie des sphérules obtenues:

| Exemples | Charges | Granulométrie en mm | | | | |
|---|---|---|---|---|---|---|
| | | > 0,500 | > 0,400 | > 0,315 | > 0,250 | > 0,200 |
| 2 | sans tensioactif | 0,8 | 29,5 | 50,6 | 18,8 | 0,2 |
| 3 | sans antioxydant | 0,55 | 23,3 | 47,3 | 29,5 | 0 |
| 4 | sans tensioactif sans antioxydant | 0,25 | 23,7 | 54 | 22,1 | 0,1 |

## Revendications

1. Procédé de préparation de sphérules d'un ou de plusieurs principes actifs alimentaires ou médicamenteux caractérisé en ce qu'on prépare une émulsion huile dans l'eau à base d'une charge alimentaire et/ou médicamenteuse, d'une protéine et d'eau, on fait passer cette émulsion dans une buse de façon à former des sphérules, on laisse tomber les sphérules formées dans une tour à contre courant avec de l'air froid et on les récupère dans une solution aqueuse contenant l'agent de réticulation.

2. Procédé selon la revendication 1 caractérisé en ce que la charge alimentaire est constituée des vitamines choisies parmi les vitamines A, E, D₃, B₁₂, H, K₃, PP, B₁, B₂, B₃, B₅, B₆.

3. Procédé selon la revendication 1 caractérisé en ce que la protéine est la gélatine.

4. Procédé selon la revendication 1 caractérisé en ce que l'huile est choisie parmi la vitamine A, la vitamine E, l'huile de colza, l'huile d'arachide, de tournesol ou de foie de morue.

5. Procédé selon la revendication 1 caractérisé en ce que l'émulsion contient en plus un agent antioxydant choisi parmi le tertiobutyl-3 hydroxy-4 anisole, le ditertiobutyl-3,5 hydroxy-4 toluène, l'éthoxy-6 dihydroxy-1,2 triméthyl-2,2,4 quinoléine et le tertiobutyl-2 dihydroxy-1,4 toluène.

6. Procédé selon la revendication 1 caractérisé en ce que l'émulsion contient en plus un agent tensioactif choisi parmi le thiodipropionate de dilauryle, un stéarate alcalin ou alcalinoterreux, le stéaroyl-2 lactylate de sodium ou de calcium, ou la carboxyméthylcellulose.

7. Procédé selon l'une quelconque des revendications 1 à 6 caractérisé en ce que l'émulsion est formée par mélange d'une solution huileuse à base ou contenant un ou plusieurs principes actifs et éventuellement un ou plusieurs agents antioxydants et d'une solution aqueuse contenant la protéine, et éventuellement un ou plusieurs agents tensioactifs.

8. Procédé selon la revendication 7 caractérisé en ce que l'émulsion est formée par un mélange d'environ 10 à 30 % en poids de la solution huileuse et de 70 à 90 % en poids de la solution aqueuse.

9. Procédé selon l'une quelconque des revendications précédentes caractérisé en ce qu'avant de procéder à la séparation des sphérules on effectue une étape de réticulation.

10. Procédé selon la revendication 9 caractérisé en ce que l'agent de réticulation est un aldéhyde choisi parmi l'acétaldéhyde, le glutaraldéhyde, le glyoxal.

11. Procédé selon la revendication 10 caractérisé en ce que l'agent de réticulation est constitué par une solution aqueuse contenant 5 à 20 % en poids d'agent de réticulation ou le produit pur.

12. Procédé selon l'une quelconque des revendications précédentes caractérisé en ce que l'émulsion contenant le ou les principes actifs et la protéine est passée à travers une buse vibrée contenant une ou plusieurs perforations à cocourant avec un jet d'air, les sphérules formées à la sortie de la buse sont mises en contact avec un contrecourant d'air froid et sont réceptionnées dans une solution aqueuse contenant un aldéhyde.

13. Procédé selon la revendication 12 caractérisé en ce que le diamètre des perforations de la buse est d'environ 100 microns.

14. Procédé selon la revendication 12 caractérisé en ce que la température de l'air injecté à co courant avec l'émulsion est compris entre la température ambiante et 60°C.

15. Procédé selon la revendication 12 caractérisé en ce que la température de l'air injecté à contre courant de la chute des sphérules est comprise entre - 20°C et 20°C.

16. Procédé selon la revendication 12 caractérisé en ce que le système de récupération des sphérules est constitué par un bac de récupération des sphérules contenant une solution aqueuse de l'agent de réticulation qui alimente tangentiellement un tambour tournant qui permet de séparer les sphérules de la solution de réticulation.

17. Procédé selon la revendication 16 caractérisé la solution de réticulation est maintenue à une température comprise entre 5 et 20°C.

18. Procédé selon la revendication 16 caractérisé en ce que après passage sur le tambour la solution de réticulation est recyclée vers le système de récupération des sphérules en passant intermédiairement par un système de chauffage.

## Claims

1. A method for preparing spherules of one or several active food or medicinal ingredients, characterized in that one prepares an emulsion of oil in water, based on a food and/or medicinal charge of a protein and water, this emulsion is caused to pass into a nozzle so as to form spherules, the formed spherules are allowed to drop in a tower in contraflow with cold air, and they are recovered in an aqueous solution containing the cross-linking agent.

2. A method according to claim 1, characterized in that the food charge is made up of vitamins chosen from vitamins A, E, D₃ , B₁₂, H, K₃, PP, B₁, B₂, B₃ , B₅, B₆.

3. A method according to claim 1, characterized in that the protein is gelatine.

4. A method according to claim 1, characterized in that the oil is chosen from vitamin A, vitamin E, rapeseed oil, groundnut oil, sunflower oil or cod-liver oil.

5. A method according to claim 1, characterized in that the emulsion contains, moreover, an antioxidant chosen from tert-butyl-3 hydroxy-4 anisole, ditert-butyl-3.5 hydroxy-4 toluene, ethoxy-6 dihydroxy-1.2 trimethyl-2.2.4 quinoline and tert-butyl-2 dihydroxy-1.4 toluene.

6. A method according to claim 1, characterized in that the emulsion contains, moreover, a surfactant chosen from dilauryl thiodipropionate, an alkaline or alkaline-earth stearate, stearoyl-2 lactylate of sodium or of calcium, or carboxymethyl-cellulose.

7. A method according to any one of claims 1 to 6, characterized in that the emulsion is formed by mixing an oil-based solution or one containing one or several active ingredients and optionally, one or several antioxidants and an aqueous solution containing the protein, optionally one or several surfactants.

8. A method according to claim 7, characterized in that the emulsion is formed by a mixture of approximately 10 to 30% by weight of the oily solution and 70 to 90% by weight of the aqueous solution.

9. A method according to any one of the preceding claims, characterized in that, before proceeding with the separation of the spherules, a cross-linking step is carried out.

10. A method according to claim 9, characterized in that the cross-linking agent is an aldehyle chosen from acetaldehyde, glutaraldehyde, glyoxal.

11. A method according to claim 10, characterized in that the cross-linking agent is constituted by an aqueous solution containing 5 to 20% by weight of the cross-linking agent or the pure product.

12. A method according to any one of the preceding claims, characterized in that the emulsion containing the active ingredient or ingredients and the protein is passed through a vibrated nozzle containing one or several perforations, in concurrent flow with an air jet, the spherules formed at the outlet of the nozzle are placed into contact with a contraflow of cold air and are received in an aqueous solution containing an aldehyde.

13. A method according to claim 12, characterized in that the diameter of the perforations of the nozzle is approximately 100 microns.

14. A method according to claim 12, characterized in that the temperature of the air injected in concurrent flow with the emulsion lies between the ambient temperature and 60°C.

15. A method according to claim 12, characterized in that the temperature of the air injected in contraflow with the drop of the spherules lies between -20°C and 20°C.

16. A method according to claim 12, characterized in that the system for recovering the spherules is made up of a tank for recovering the spherules, containing an aqueous solution of the cross-linking agent, which tangentially feeds a rotating drum which makes it possible to separate the spherules from the cross-linking solution.

17. A method according to claim 16, characterized in that the cross-linking solution is kept at a temperature comprised between 5 and 20°C.

18. A method according to claim 16, characterized in that after passing over the drum, the cross-linking solution is recycled towards the system for recovering the spherules by passing in an intermediate stage through a heating system.

## Patentansprüche

1. Verfahren zur Herstellung von Kugelchen von einem oder mehreren medikamentösen Wirkstoffen oder Nahrungsmittel-Wirkstoffen, dadurch gekennzeichnet, daß man eine Öl-in-Wasser-Emulsion auf der Basis eines Nahrungsmittel-Füllstoffes und/oder medikamentösen Füllstoffes, eines Proteins und Wasser herstellt, diese Emulsion durch eine Düse passieren läßt, um die Kügelchen zu bilden und diese gebildeten Kügelchen in einem Turm im Gegenstrom mit kalter Luft fallen läßt und sie in einer wäßrigen Lösung sammelt, die das Vernetzungsmittel enthält.

2. Verfahren nach Anspruch 1, dadurch gekennzeichnet, daß der Nahrungsmittel-Füllstoff Vitamine enthält, ausgewählt unter den Vitaminen A, E, D₃, B₁₂, H, K₃, PP, B₁, B₂, B₃, B₅, B₆.

3. Verfahren nach Anspruch 1, dadurch gekennzeichnet, daß das Protein Gelatine ist.

4. Verfahren nach Anspruch 1, dadurch gekennzeichnet, daß das Öl unter Vitamin A, Vitamin E, Rapsöl, Erdnußöl, Sonnenbiumenöl oder Lebertran ausgewählt wird.

5. Verfahren nach Anspruch 1, dadurch gekennzeichnet, daß die Emulsion außerdem ein Antioxidationsmittel enthält, ausgewählt unter 3-tert.-Butyl-4-hydroxy-anisol, 3,5-ditert.-Butyl-4-hydroxy-toluol, 6-Ethoxy-1,2-dihydroxy-2,2,4-trimethyl-chinolin und 2-tert.-Butyl-1,4-dihydroxy-toluol.

6. Verfahren nach Anspruch 1, dadurch gekennzeichnet, daß die Emulsion außerdem ein oberflächenaktives Mittel enthält, ausgewählt unter Thiodipropionsäure-dilaurylester, einem Alkalistearat oder Erdalkalistearat, Natrium-2-stearoyl-lactylat, Calcium-2-stearoyl-lactylat oder Carboxymethylcellulose.

7. Verfahren nach irgendeinem der Ansprüche 1 bis 6, dadurch gekennzeichnet, daß die Emulsion durch Mischen einer öligen Lösung auf der Basis von oder enthaltend ein(em) oder mehrere(n) Wirkstoff(en) und gegebenenfalls ein(em) oder mehrere(n) Antioxidationsmittel(n) und einer wäßrigen Lösung gebildet wird, die das Protein und gegebenenfalls ein oder mehrere oberflächenaktive Mittel enthält.

8. Verfahren nach Anspruch 7, dadurch gekennzeichnet, daß die Emulsion durch Mischen von etwa 10 bis 30 Gew.-% der öligen Lösung und 70 bis 90 Gew.-% der wäßrigen Lösung gebildet wird.

9. Verfahren nach irgendeinem der vorstehenden Ansprüche, dadurch gekennzeichnet, daß man vor der Abtrennung der Kügelchen eine Stufe der Vernetzung durchführt.

10. Verfahren nach Anspruch 9, dadurch gekennzeichnet, daß das Vernetzungsmittel ein Aldehyd ist, ausgewählt unter Acetaldehyd, Glutaraldehyd und Glyoxal.

11. Verfahren nach Anspruch 10, dadurch gekennzeichnet, daß das Vernetzungsmittel aus einer wäßrigen Lösung besteht, die 5 bis 20 Gew.-% Vernetzungsmittel oder das reine Produkt enthält.

12. Verfahren nach irgendeinem der vorstehenden Ansprüche, dadurch gekennzeichnet, daß man die Emulsion, die ein oder mehrere Wirkstoffe und das Protein enthält, durch eine vibrierende Düse passieren läßt, die ein oder mehrere Löcher für das Zusammenströmen mit einem Luftstrahl aufweist, wobei die am Ausgang der Düse gebildeten Kügelchen in Kontakt min einem Gegenstrom von kalter Luft gebracht und in einer wäßrigen Lösung aufgenommen werden, die einen Aldehyd enthält.

13. Verfahren nach Anspruch 12, dadurch gekennzeichnet, daß der Durchmesser der Löcher in der Düse etwa 100 µm beträgt.

14. Verfahren nach Anspruch 12, dadurch gekennzeichnet, daß die Temperatur der zusammen mit der einströmenden Emulsion eingespritzten Luft zwischen Umgebungstemperatur und 60 °C beträgt.

15. Verfahren nach Anspruch 12, dadurch gekennzeichnet, daß die Temperatur der eingespritzten Luft, die mit den herunterfallenden Kügelchen im Gegenstrom geführt wird, zwischen -20 °C und 20 °C beträgt.

16. Verfahren nach Anspruch 12, dadurch gekennzeichnet, daß das System zur Gewinnung der Kügelchen aus einem Sammelbehälter für die Kügelchen besteht, der eine wäßrige Lösung des Vernetzungsmittels enthält, die ihrerseits tangential in eine sich drehende Trommel eingespeist wird, die eine Abtrennung der Kügelchen von der Vernetzungslösung ermöglicht.

17. Verfahren nach Anspruch 16, dadurch gekennzeichnet, daß die Vernetzungslösung auf einer Temperatur zwischen 5 °C und 20 °C gehalten wird.

18. Verfahren nach Anspruch 16, dadurch gekennzeichnet, daß die Vernetzungslösung nach dem Passieren über die Trommel zum System zur Gewinnung der Kügelchen zurückgeführt wird, indem sie ein dazwischen angeordnetes System zum Erhitzen passiert.
